# EUROPEAN PATENT SPECIFICATION

(11) **EP 2 526 326 B1**
(45) Date of publication and mention of the grant of the patent: **07.03.2018**
(21) Application number: 10838365.4
(22) Date of filing: 21.01.2010
(51) Int. Cl.: F16K 31/00, F16K 31/44, F16K 31/56, F16K 5/06, F03B 11/00

(54) **TWIN CABLE SPRING SUSPENDED CLOSING WEIGHT**
AN EINER DOPPELTEN KABELFEDER AUFGEHÄNGTES VERSCHLUSSGEWICHT
POIDS DE FERMETURE SUSPENDU PAR RESSORTS ET CÂBLES

(43) Date of publication of application: 28.11.2012
(73) Proprietor: Bharat Heavy Electricals Limited, Siri Port, New Delhi 110 049 (IN)
(72) Inventor: GIRONIA, Rajneesh, Kumar, Bhel, Bhopal (IN); PRASAD, Karri, BHEL, Bhopal (IN); KHARE, Amit, BHEL, Bhopal (IN)
(74) Representative: Green, Mark Charles
(86) International application number: PCT/IN2010/000037
(87) International publication number: WO 2011/089613

(56) References cited:
- CN-Y- 2 433 483
- CN-Y- 201 354 875
- GB-A- 277 506
- JP-A- 11 107 899
- JP-A- 2001 050 412
- JP-U- S54 156 235

## Description

### FIELD OF THE INVENTION

This invention relates to emergency closure of valves for hydro electric power stations using weights and cables. More particularly the invention relates to a twin cable spring suspended closing weight for emergency closing spherical valve. This invention further relates to a method of providing adjustable and lockable stops on the concrete wall in a turbine.

### BACKGROUND OF THE INVENTION

In a typical medium or high speed hydroelectric station spherical valve is installed upstream of a turbine as a shut-off device. The function of the spherical valve is to close the turbine for following purposes:
1. To empty the turbine without emptying the penstock.
2. To shut-off water to the turbine after closure of turbine guide apparatus to prevent leakage (wastage) across guide apparatus of reaction turbines or needles of Pelton turbine.
3. To seal the turbine against upstream water for maintenance of turbine parts.
4. Emergency closure of turbine when the turbine fails to close due to malfunctioning of governor controlled servomotors.

### Valve Closing Arrangement

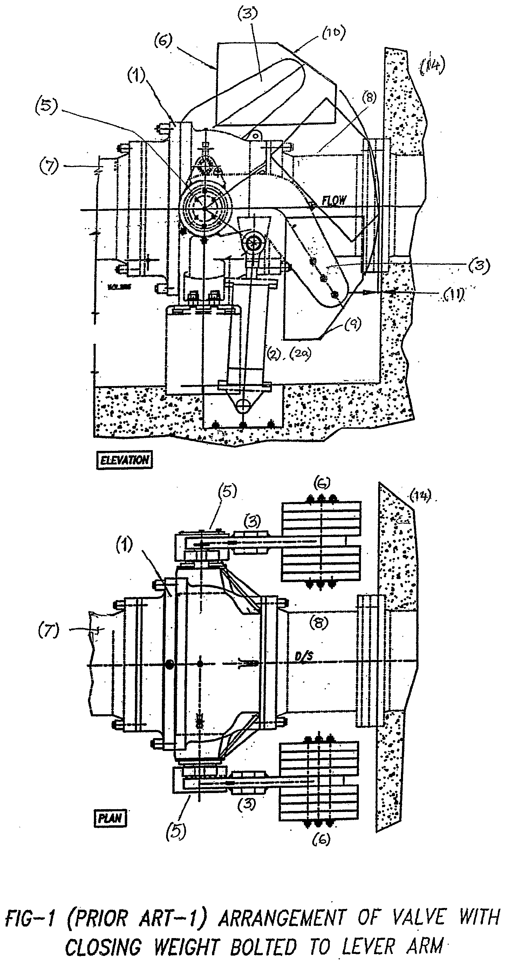

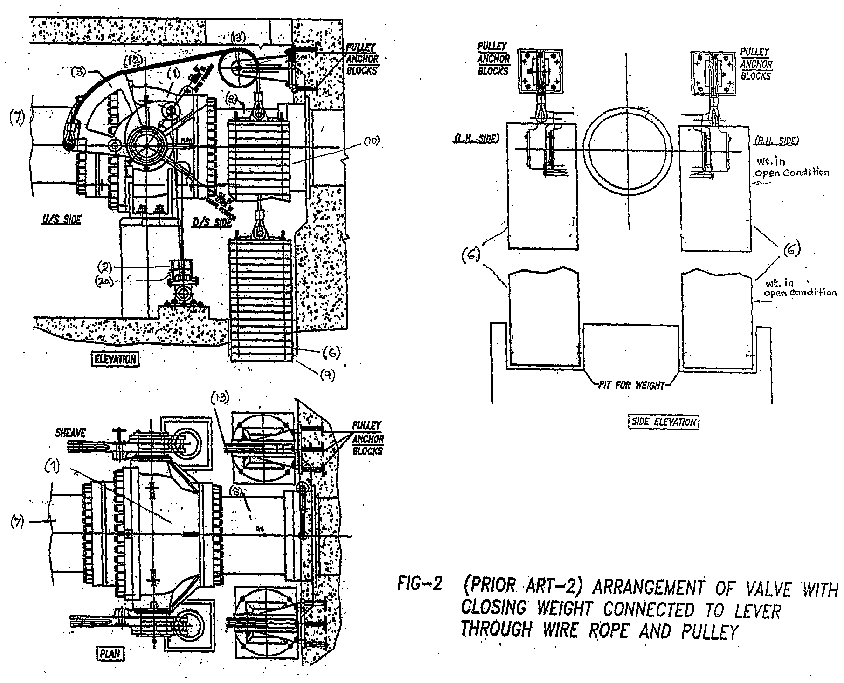

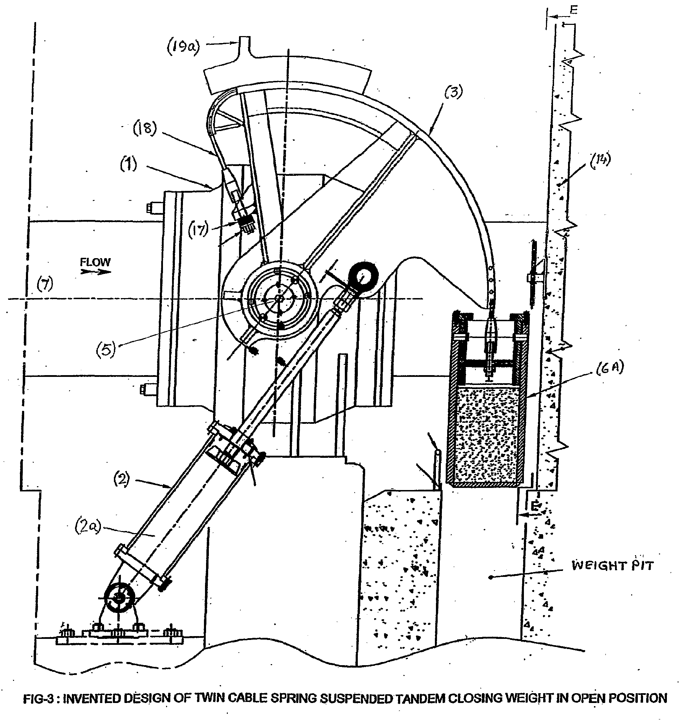

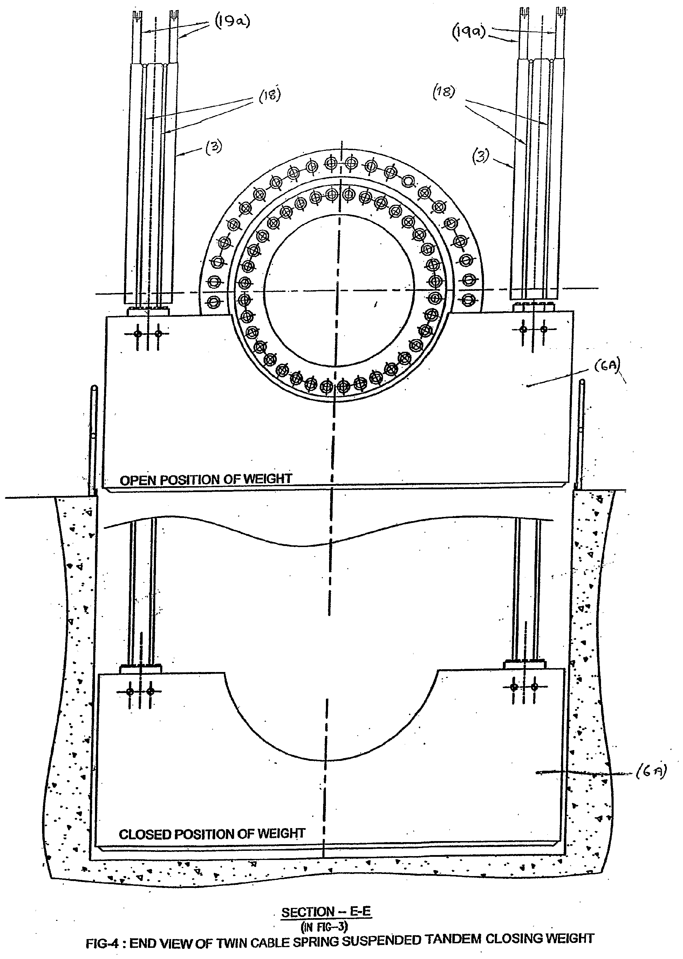

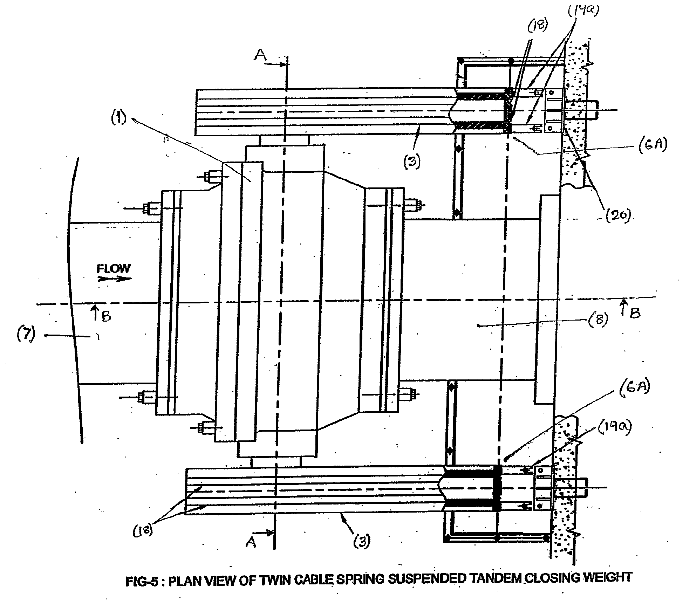

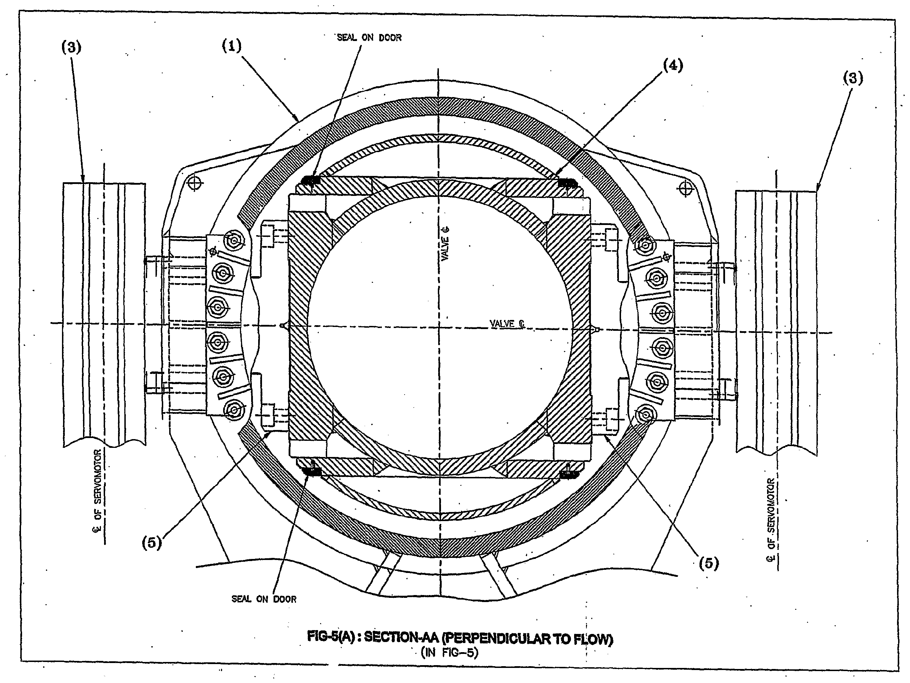

As shown in fig.1, in the prior art arrangement, a spherical valve is closed by a hydraulic servomotor (2) i.e. an oil operated hydraulic cylinder (2a) connected to a lever (3). As shown in fig. 5(A), the lever (3) is in turn connected to a door (4) of the valve (1) through a trunnion (5). To improve reliability of emergency closing, provision of dead weight (6) could be one solution to this prior art turbine. This means that in case of low oil pressure or oil pressure failure, the valve (1) shall be closed by the torque of the dead weight (6) hung on the lever (3) of the valve door (4).

### Arrangement of Locks

For maintenance purpose it is required to lock the spherical valve door (4) either in the closed or open position (9,10) for the safety of maintenance staff & the turbine against any accidental opening or closing.

### Arrangement of Stops

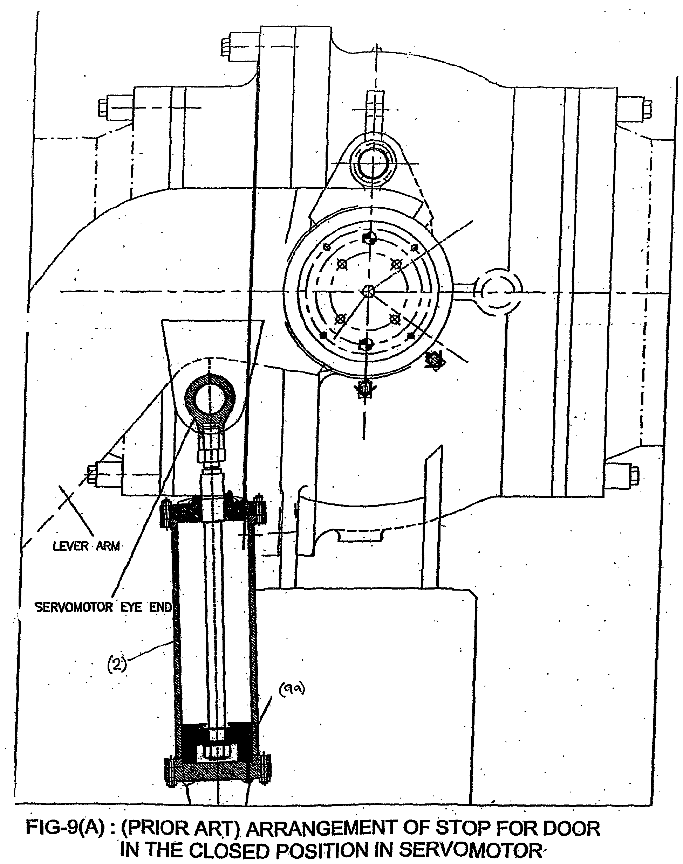

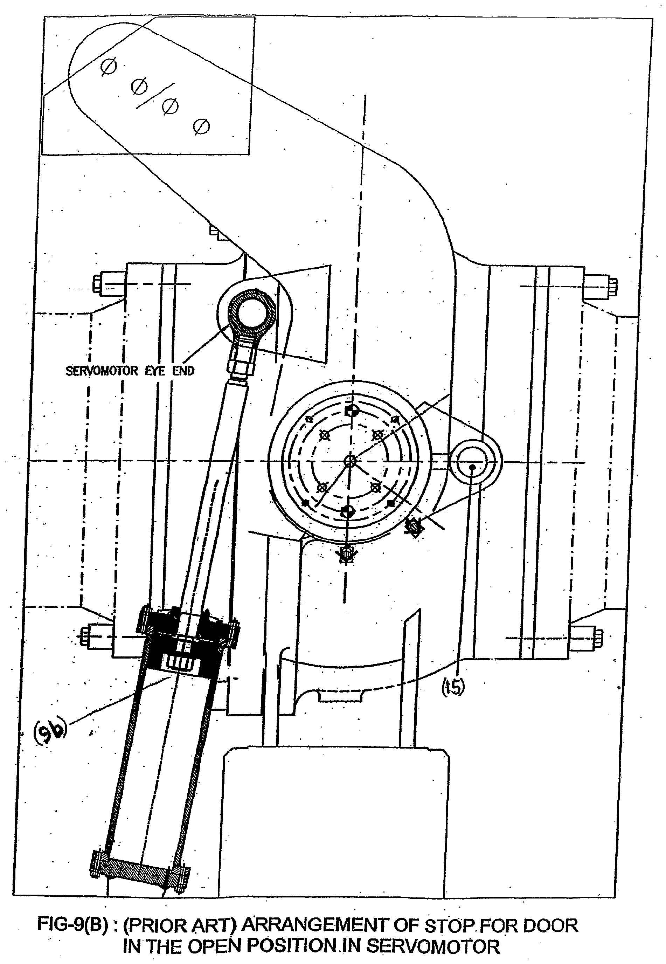

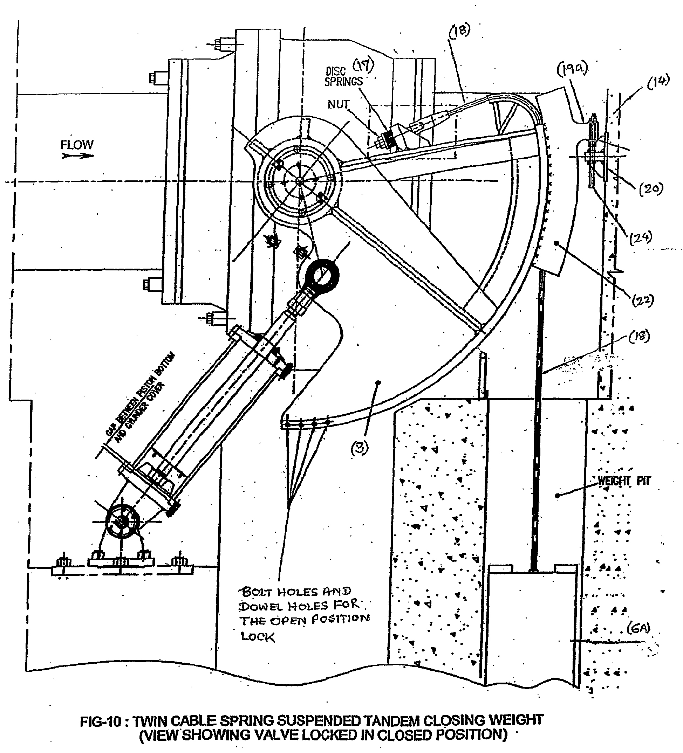

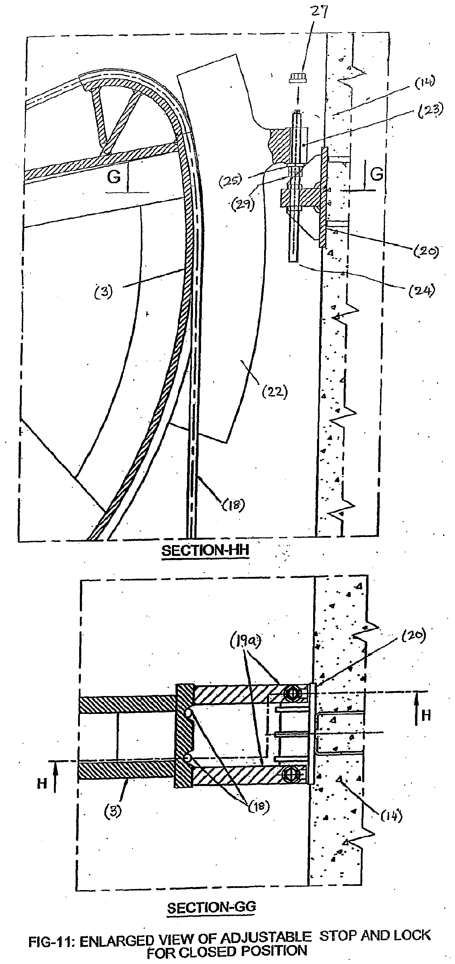

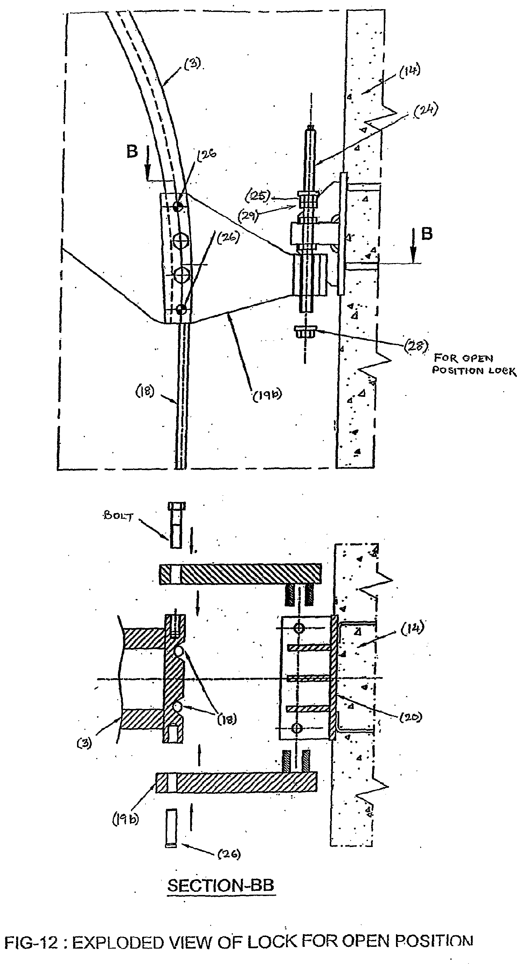

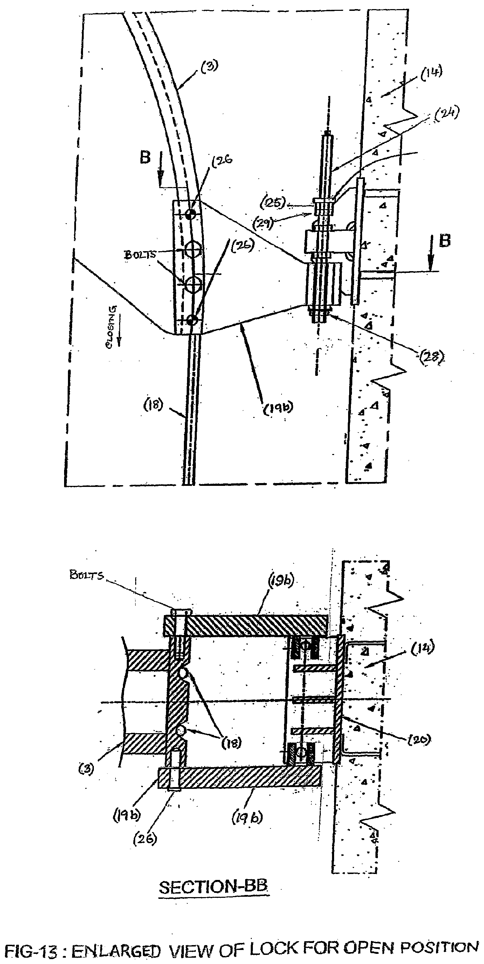

The stops for the door movement are provided by hydraulic cylinders (2a) of the servomotor (2) which rotate the door. As shown in figs-9(A)&9(B), the rotation of the door (4) stops in closed and open position when the piston of the servomotor (2) touches the ends of the cylinder top and bottom covers. The angular movement of the door corresponds to a function of the servomotor stroke. Hence if there is some variation in the stroke, it reflects in the angular movement of the door for which there is no provision for adjustment.The spherical valve door (4) is rotated by 90° from a fully closed position (9) to a full open position (10) by the hydraulic servomotor (2). In the fully closed position (9), the seals on the door (4) are required to align perfectly with the seals provided on the body of the valve (1) to achieve perfect sealing. In the fully open position (10), the bore of the valve door (4) is to align with inlet and outlet pipes (7,8) so that water flows smoothly without any disturbance. The rotation of the valve door (4) stops when the piston of the servomotor (2) touches the cylinder ends as shown in fig. 9(A) & 9(B). Hence variation in the stroke of the servomotor (2) reflects on open position of the door (4). For adjusting the door (4) corresponding to a closed position (9), the piston rod has to be manually turned by a huge spanner, which is neither convenient nor very precise.

### Closing weight Arrangement

### A) Dead weight clamped/bolted to lever arms of door

In this prior art arrangement, the dead weights/closing weights (6) are bolted on the levers (3) of the valve door (4). Figure-1 of prior art shows an arrangement where the dead weights (6) for emergency closing of the valve (1) are clamped/bolted on the lever arm. The location of the weight (6) from the trunnion axis (5) changes with angular position of the lever arm (3) and is minimum in the fully open (9) and fully closed positions (10), when it is required the most. As a result of this the magnitude of the closing weight has to be increased disproportionately which increases the cost. This arrangement has the following drawbacks:
a) To provide a clearance (11) with concrete walls (14) or columns of the powerhouse, the dead weights (6) have to be located at smaller radius. Thus, to achieve the required closing torque, the closing weights (6) have to be very heavy since the radius is small.
b) In the fully open position (10), since the weights (6) come closer to the valve door trunnion (5), the initiating torque for closing the door (4) becomes less. Hence to get required initiating torque the magnitude of closing weight (6) and hence the size has to be increased.

Thus on both the situations, the size of the closing weight (6) gets increased.

Increased magnitude of the closing weight, in-turn increase the trunnion bearing friction and the servomotor size.

For the limited space available, the closing weights (6) are made of steel. For a medium size valve, the closing weight (6) could be of the order of 70 T.

### B) Dead weights/closing weights connected to lever arm through a wire rope & pulley

In the prior art arrangement shown at figure-2, the closing weight (6) is connected to the lever arm (3) of the door (4) through a wire rope (12) with a pulley arrangement (13) to change the direction of the rope (12). This arrangement provides a constant closing torque but needs an elaborate arrangement of fixing the pulleys and the weight and suitable arrangement to prevent rotation of weights and their rubbing with the weight pit in concrete.

The drawback of this arrangement is that a very huge pulley block has to be firmly fixed in concrete. The pulley radius has to be sufficiently big as per safety norms viz-20 times the rope diameter.

Also, the pulley (13) is to be provided with bearings for smooth operation and to reduce bearing friction loss.

### Arrangement of Locks

The arrangement for locking the spherical valve door as shown in fig-8 comprises a substantially large pin (15) inserted through a separate projecting arm of lever (3) into bosses (16) which are integral with the body of the valve. There are two bosses (16) on the body 90° apart, one corresponding to the closed position (9) and the other corresponding to the open position (10).

### Arrangement of Stops

The stops for the angular movement of door is provided by hydraulic cylinders (2a) of the servomotor (2) which rotate the door. As shown in figs-9(A)&9(B), the rotation of the door (4) stops in closed and open position when the piston of the servomotor (2) touches the ends of the cylinder top and bottom covers. The angular movement of the door corresponds to a function of the servomotor stroke. Hence if there is some variation in the stroke, it reflects in the angular movement of the door for which there is no provision for adjustment.

### OBJECTS OF THE INVENTION

It is therefore an object of the invention to propose a twin cable spring suspended closing weight for emergency closing of spherical valve of a turbine, which provides an adjustable stop and locks, and which eliminates the disadvantages of prior art.

Another object of the invention is to propose a twin cable spring suspended closing weight for emergency closing of spherical valve of a turbine which improves the reliability of an arrangement of suspending weight from lever arm of the spherical valve.

A still another object of the invention is to propose a twin cable spring suspended closing weight for emergency closing of spherical valve of a turbine which reduces the magnitude of the weight of the emergency closing weight.

A further object of the invention is to propose a twin cable spring suspended closing weight for emergency closing of spherical valve of a turbine which reduces the cost of the closing weight.

A still further object of the invention is to propose a twin cable spring suspended closing weight for emergency closing of spherical valve of a turbine which provides adjustable lockable stops for the door on the concrete wall.

### PRIOR ART

JP S54156235 U and JP 11107899 A relate to methods for closing a spherical valve of a turbine. JP S54156235 U discloses a door which is counterbalanced by a weight.

### SUMMARY OF THE INVENTION

According to the present invention there is provided a twin cable spring suspended weight arrangement for emergency closing of a spherical valve of a turbine, the closing weight arrangement comprising at least one closing weight (6A) operable in tandem and suspended by cables attached to two lever arms sheave sectors (3) and capable of moving in a weight pit for closing and opening of the spherical valve (1) of the turbine; wherein the closing weight (6A) is disposed at a distant end from a trunnion axis (5) of the spherical valve, characterised in that the closing weight arrangement is provided with increased sheave radius for enabling reduction in magnitude of weights; and in that each weight (6A) is connected to a plurality of cables (18) attached to each lever arms sheave sectors (3), each weight (6A) being suspended through a plurality of pre-loaded disc springs (17). Preferably, the pre-loaded disc springs (17) enables equal sharing of the load by the cables (18). Further, an adjustable lockable stop (19a) is provided with a plurality of locking arms (22) welded to each of the plurality of lever arms (3) for locking the spherical valve (1) in closed position. More preferably, there is provided a removable lock (19b) bolted on the lever (3) for locking the valve (1) in open position.

### BRIEF DESCRIPTION OF THE ACCOMPANYING DRAWINGS

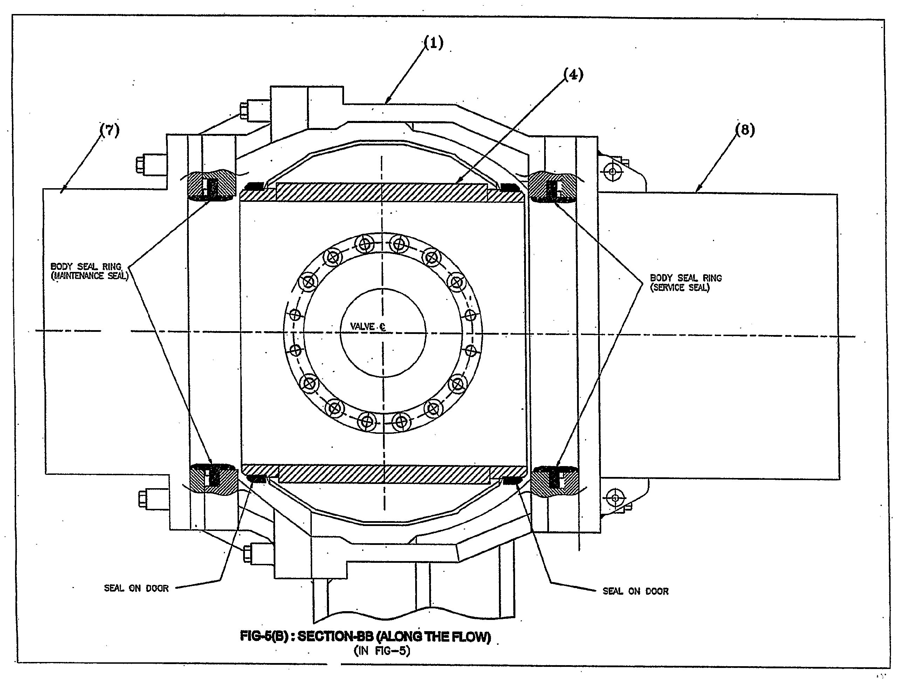

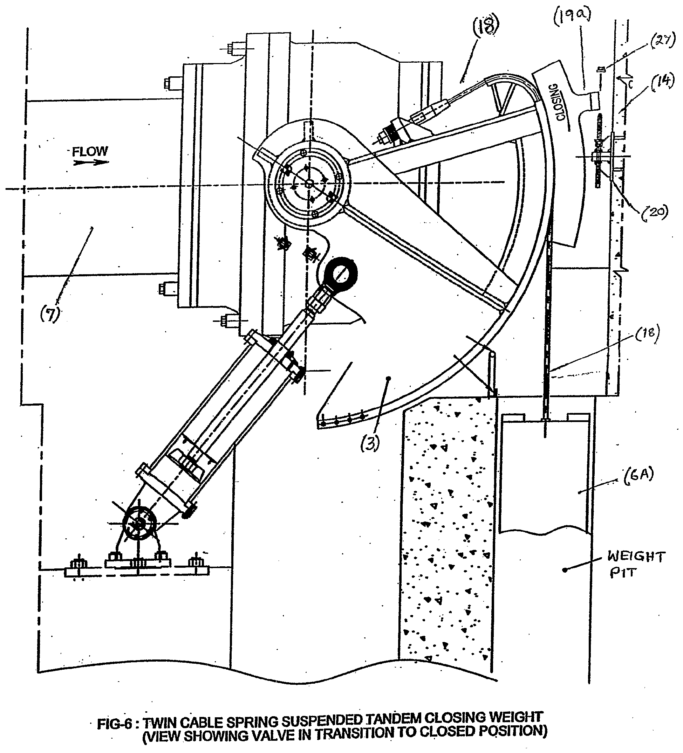

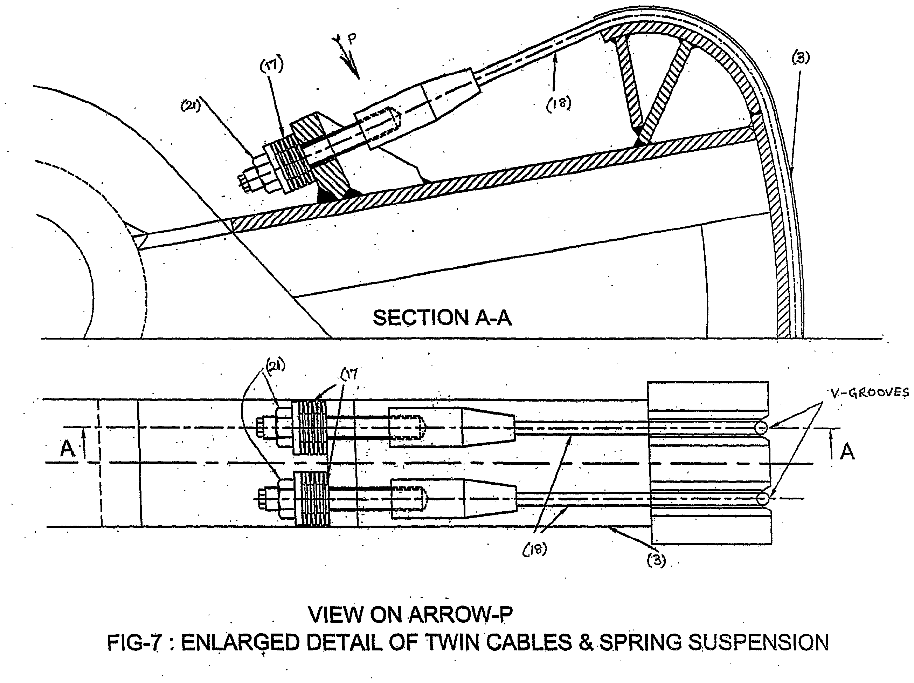

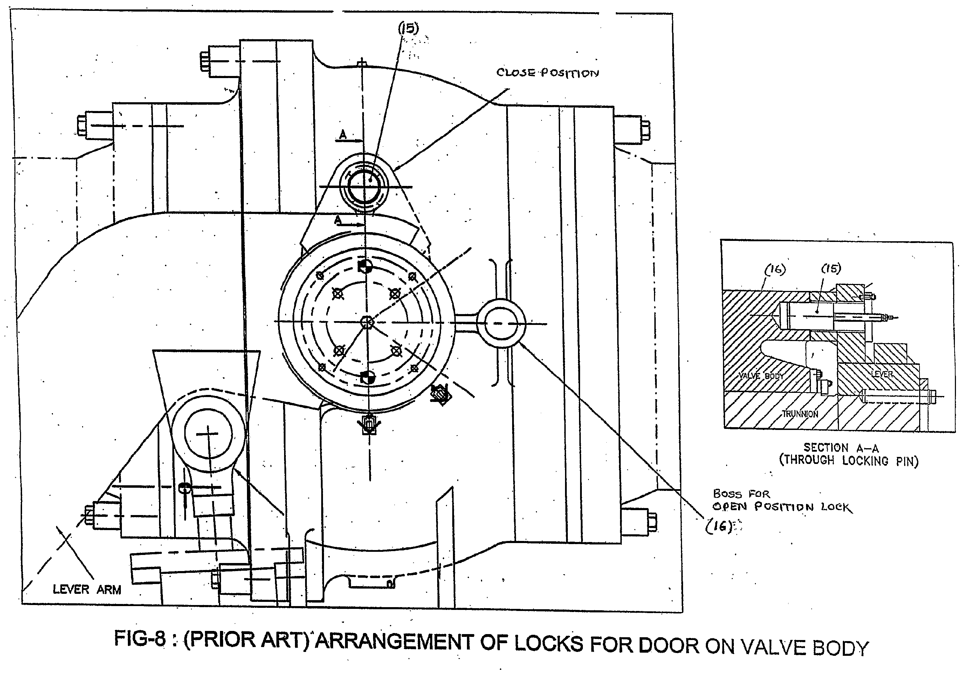

- Fig-1: (Prior Art-1) Arrangement of valve with closing weight bolted to lever arm.
- Fig-2: (Prior Art-2) Arrangement of valve with closing weight connected to lever through wire rope and pulley.
- Fig-3: A twin cable spring suspended tandem closing weight in open position according to the present invention.
- Fig-4: End view of the twin cable spring suspended tandem closing weight according to the present invention.
- Fig-5: Plan view of the twin cable spring suspended tandem closing weight according to the invention.
- Fig-5(A): Sectional view through Section AA of fig.5 (perpendicular to flow) to show the position of valve door.
- Fig-5(B): Sectional view through Section BB of fig.5 (along the flow) to show the position of valve door.
- Fig-6: Twin cable spring suspended tandem closing weight (view showing valve in transition to closed position).
- Fig-7: Enlarged. view of twin cables and spring suspension arrangement according to the invention.
- Fig-8: (Prior art) Arrangement of locks for the door on the valve body.
- Fig-9A,9B: (Prior art) Arrangement of stops for the door in servomotor in closed and open positions.
- Fig-10: Twin cable spring suspended tandem closing weight (view showing valve locked in closed position) according to the invention.
- Fig-11: Enlarged view of the adjustable stop and lock for closed position according to the invention.
- Fig-12: Exploded view of lock for open position according to the invention.
- Fig-13: Enlarged view of lock for open position according to the invention.

### DETAILED DESCRIPTION OF A PREFERRED EMBODIMENT OF THE INVENTION

### Closing weight arrangement:

Figures-3 to 6 show the improved closing weight (6A), for example, the tandem closing weight, whereby the redundant space below the outlet pipe (8)/inlet pipe (7) and between the two closing weights (6) of prior art is utilized for the improved closing weight (6A). The tandem closing weight (6A) of the invention, is hung by at least four wire ropes (18), two from each of two lever arms cum sheave sectors (3). Since the weight moves in a vertical plane at a constant distance from the trunnion (5) axis, the closing torque is constant throughout the angular movement of the lever (3). Since the redundant space between the two independent weights of the prior art is utilized, the width of the closing weight (6A) reduces. Reduced width of closing weight (6A) permits increase of sheave radius i.e. locating weights at the farthest possible distance from the trunnion axis (5). Increased sheave radius allows further reduction of the weight of the closing weight (6A). In this way a few iterations results in drastic reduction of magnitude/weight of the closing weight (6A). In a variation of the configuration, the tandem weight (6A) can be used on the upstream side below the inlet pipe (7).

In the prior art, the weights from each lever is suspended through a single wire rope/cable; whereas in the present invention, the weight is suspended by two cables (18) from each lever thus increasing the reliablility. Thus, in case one wire rope fails/breaks the emergency closing function is not impaired as the load is taken up by the second cable.Due to variation in length of the slings/cables (18), the load of closing weight (6A) would be taken up by the shorter cable on each side. To eliminate such a problem and to ensure that the two (twin) cables from each lever share the load, a system of disc springs (17) has been introduced (Refer fig-7). By tightening the nut (21) the disc springs (17) are pre-loaded which in turn cater for absorbing variations of sling length and proper sharing of the load by the two cables on each side.

### Arrangement of Locks

In the prior art the locking arrangement consisted of a large pin (15) inserted through a special projecting arm of the lever (3) into bosses which are integral with body of the valve (1) (Refer fig-9A & 9B). There are two bosses (16) 90° apart one for the closed position (16A) and the other for the open position (16B). The locking pin holes in the lever (3) and in the boss (16) on the body are made by a combined reaming operation on assembly at works.

The improved design for the locking arrangement consists of a locking arm (22) being welded to the outer diameter of the lever (3) so as to bridge the gap between the lever outer diameter and a bracket (20) on wall (Refer fig-10&11). The locking arm (22) also contributes to the closing tendency of the valve (1) in a more effective manner. A U-shaped slot (23) is provided in a projection of the locking arm (22).

The U-shaped fork moves over a stud (24) bolted to the bracket on the wall. Once the locking arm (22) of the lever (3) sits on a nut (25) fixed to the locking stud (24), a collared nut (27) is tightened to lock the lever (3) in the closed position. Since there are four locks all of which are tightened independently, the load of locking is uniformly shared by both the levers (3) whereas in the prior art the locking load is taken by one of the two levers only. For the open position (16B) a separate locking piece is bolted to the lever once the spherical valve door (4) comes to full open position (16B) (Refer fig-12). The load of the lock is taken by at least two dowels (26) for each locking piece. After assembly of the four locking pieces, washers are put below the slots on the locking pieces and the nuts are tightened. Thus by tightening the four nuts, the load of the opening lock is shared by both the levers.

### Arrangement of Stops

According to prior art the stops the stopping of a angular movement of the valve door at closed and open positions is performed in the hydraulic cylinder/servomotor (2a/2) (Refer fig-9A &9B). The angular movement of the valve door stops once the piston touches the cylinder end covers. In the prior art there was not much scope of adjustment in the position of the stops either due to variation in servomotor stroke or the disposition of the servomotor on its foundation. In the improved configuration, the stop consists of a nut whose position can be adjusted on the locking stud (24) fixed to the bracket (20) (Refer fig-11). Since the position of the micrometer stop nut (25) can be adjusted axially along the locking stud (24) at the farthest radius from trunnion axis the angular position of the door (4) can be adjusted with very high precision by the micrometer adjustment nut (25) on the bracket (20) fixed on the concrete wall (14) to achieve perfect alignment of the seal on the door (4) with respect to the seal provided in body. This perfect alignment in-turn improves the sealing performance and hence improves the life of the seal.

As shown in fig-3, a twin cable (18) spring suspended (17) tandem closing weight (6A) is disposed at the top of weight pit in open position when the servomotor (2) pushes the piston of the cylinder (2a) to touch the top cover of the cylinder.

## Claims

1. A twin cable spring suspended weight arrangement for emergency closing of a spherical valve of a turbine, the closing weight arrangement comprising:
at least one closing weight (6A) operable in tandem and suspended by cables attached to two lever arms sheave sectors (3) and capable of moving in a weight pit for closing and opening of the spherical valve (1) of the turbine;
wherein the closing weight (6A) is disposed at a distant end from a trunnion axis (5) of the spherical valve, **characterised in that** the closing weight arrangement is provided with increased sheave radius for enabling reduction in magnitude of weights; and **in that** each weight (6A) is connected to a plurality of cables (18) attached to each lever arms sheave sectors (3), each weight (6A) being suspended through a plurality of pre-loaded disc springs (17).

2. The closing weight arrangement as claimed in claim 1, wherein the pre-loaded disc springs (17) enables equal sharing of the load by the cables (18).

3. The closing weight arrangement as claimed in claim 1, comprising an adjustable lockable stop (19a) is provided with a plurality of locking arms (22) welded to each of the plurality of lever arms (3) for locking the spherical valve (1) in closed position.

4. The closing weight arrangement as claimed in claim 1, comprising a removable lock (19b) bolted on the lever (3) for locking the valve (1) in open position.

## Patentansprüche

1. Doppelkabelanordnung mit an einer Feder aufgehängtem Gewicht zum Notschließen eines Kugelventils einer Turbine, wobei die Schließgewichtsanordnung Folgendes umfasst:
wenigstens ein Schließgewicht (6A), das in Tandem betrieben werden kann und an Kabeln aufgehängt ist, die an zwei Hebelarmrollensektoren (3) angebracht sind und sich in einer Gewichtsaufnahme zum Schließen und Öffnen des Kugelventils (1) der Turbine bewegen können;
wobei das Schließgewicht (6A) an einem fernen Ende von einer Zapfenachse (5) des Kugelventils angeordnet ist, **dadurch gekennzeichnet, dass** die Schließgewichtsanordnung mit einem zunehmenden Rollenradius versehen ist, um eine Reduzierung der Größe von Gewichten zu ermöglichen; und dadurch, dass jedes Gewicht (6A) mit mehreren Kabeln (18) verbunden ist, die an jedem Hebelarmrollensektor (3) angebracht sind, wobei jedes Gewicht (6A) durch mehrere vorbelastete Scheibenfedern (17) aufgehängt ist.

2. Schließgewichtsanordnung nach Anspruch 1, wobei die vorbelasteten Scheibenfedern (17) ein gleichmäßiges Verteilen der Last durch die Kabel (18) ermöglicht.

3. Schließgewichtsanordnung nach Anspruch 1, die einen verstellbaren sperrbaren Anschlag (19A) umfasst, der mit mehreren Sperrarmen (22) versehen ist, die an jeden der mehreren Hebelarme (3) geschweißt sind, um das Kugelventil (1) in der geschlossenen Position zu sperren.

4. Schließgewichtsanordnung nach Anspruch 1, die eine entfernbare Sperre (19b) umfasst, die an den Hebel (3) geschraubt ist, um das Ventil (1) in der offenen Position zu sperren.

## Revendications

1. Agencement double de poids suspendu par des ressorts et des câbles servant à des fins de fermeture d'urgence d'une soupape sphérique d'une turbine, l'agencement de poids de fermeture comportant :
au moins un poids de fermeture (6A) fonctionnant en tandem et suspendu par des câbles attachés à deux secteurs de poulie à bras de levier (3) et en mesure de se déplacer dans un cuvette pour poids à des fins de fermeture et d'ouverture de la soupape sphérique (1) de la turbine ;
dans lequel le poids de fermeture (6A) est disposé au niveau d'une extrémité distante par rapport à un axe de tourillon (5) de la soupape sphérique, **caractérisé en ce que** l'agencement de poids de fermeture comporte un rayon augmenté de poulie permettant une réduction de la grandeur de poids ; et **en ce que** chaque poids (6A) est raccordé à une pluralité de câbles (18) attachés à chacun des secteurs de poulie à bras de levier (3), chaque poids (6A) étant suspendu par une pluralité de ressorts à disques pré-chargés (17).

2. Agencement de poids de fermeture selon la revendication 1, dans lequel les ressorts à disques pré-chargés (17) permettent une répartition égale de la charge par les câbles (18).

3. Agencement de poids de fermeture selon la revendication 1, comportant une butée verrouillable ajustable (19a) ayant une pluralité de bras de verrouillage (22) soudés à chacun de la pluralité de bras de levier (3) à des fins de verrouillage de la soupape sphérique (1) en position fermée.

4. Agencement de poids de fermeture selon la revendication 1, comportant un verrou amovible (19b) boulonné sur le levier (3) à des fins de verrouillage de la soupape (1) en position ouverte.
